# EUROPÄISCHE PATENTSCHRIFT

(11) **EP 4 612 016 B1**
(45) Veröffentlichungstag und Bekanntmachung des Hinweises auf die Patenterteilung: **06.05.2026**
(21) Anmeldenummer: 23751611.7
(22) Anmeldetag: 01.08.2023
(51) Int. Cl.: B60Q 1/26, B60Q 1/30, B60R 19/52, B60Q 1/28

(54) **KÜHLERSCHUTZGITTER FÜR EIN KRAFTFAHRZEUG SOWIE KRAFTFAHRZEUG MIT EINEM SOLCHEN KÜHLERSCHUTZGITTER**
RADIATOR GRILLE FOR A MOTOR VEHICLE, AND MOTOR VEHICLE COMPRISING SUCH A RADIATOR GRILLE
GRILLE DE RADIATEUR POUR VÉHICULE AUTOMOBILE ET VÉHICULE AUTOMOBILE COMPRENANT UNE TELLE GRILLE DE RADIATEUR

(30) Priorität: 03.11.2022 DE 102022129054
(43) Veröffentlichungstag der Anmeldung: 10.09.2025
(73) Patentinhaber: AUDI AG, 85057 Ingolstadt (DE)
(72) Erfinder: KOUKAL, Andreas, 85055 Ingolstadt (DE); KÜRSCHNER, Jochen, 85049 Ingolstadt (DE); STAS, Paul, 85134 Stammham (DE); SCHNEIDER, Manuel, 85126 Münchsmünster (DE)
(74) Vertreter: Lindner Blaumeier Patent- und Rechtsanwälte
(86) Internationale Anmeldenummer: PCT/EP2023/071325
(87) Internationale Veröffentlichungsnummer: WO 2024/094334

(56) Entgegenhaltungen:
- WO-A1-2005/018989
- WO-A1-2022/199728
- DE-A1- 102014 015 185
- FR-A1- 3 087 247
- JP-A- 2015 220 205
- US-A1- 2018 361 971

## Beschreibung

Die Erfindung betrifft ein Kühlerschutzgitter für ein Kraftfahrzeug, mit einem Gitterkörper mit mehreren Gitteröffnungen.

Kraftfahrzeuge verfügen üblicherweise über ein Kühlerschutzgitter, das frontseitig vorgesehen ist und einen Gitterkörper mit einer Vielzahl von Gitteröffnungen aufweist, die einen Luftdurchtritt zu einem hinter dem Kühlerschutzgitter befindlichen Kühler erlauben, über den z.B. die Kühlung eines Kühlfluids erfolgt. Da ein solches Kühlerschutzgitter mit seiner mitunter beachtlichen Größe an einer prominenten Position, nämlich an der Fahrzeugfront, angeordnet ist, ist es bekannt, im Bereich dieses Kühlerschutzgitters eine Leuchteinrichtung vorzusehen, die es erlaubt, im Bereich des Kühlerschutzgitters Licht abzustrahlen, was die Sichtbarkeit bzw. Erkennbarkeit des Kraftfahrzeugs verbessert.

Aus der DE 10 2020 130 590 A1 ist eine Einrichtung mit einem solchen Kühlerschutzgitter bekannt, wobei dem Kühlerschutzgitter ein Reflektor zugeordnet ist, über den Licht einer oder mehrerer Leuchtelemente wie LEDs gebündelt durch die Gitterstruktur des Kühlerschutzgitters hindurchstrahlbar ist.

Aus DE 10 2020 209 963 A1 ist ein Kraftfahrzeug bekannt, bei dem dem Kühlerschutzgitter eine lichtoptische Kommunikationsvorrichtung zugeordnet ist, über die Licht durch das Kühlerschutzgitter in die Umgebung abstrahlbar ist, sodass hierüber ein entsprechendes Beleuchtungsbild zur Übermittlung einer Nachricht durch Aufprojizieren des Leuchtmusters darstellbar ist. Die Möglichkeit, Gitterdurchbrechungen gezielt zu öffnen und zu schließen, erlaubt die Variation des Leuchtmusters.

Die bekannten Einrichtungen sind sehr aufwendig konzipiert und beruhen darauf, Licht durch ein Kühlerschutzgitter hindurch zu strahlen.

In WO 2005/018989 A1 ist eine Leuchtvorrichtung für Fahrzeuge beschrieben, die an einem Kühlerschutzgitter vorgesehen ist. Vorgesehen ist ein Kühlerschutzgitter umfassend einen Gitterkörper, an dem mehrere Gitteröffnungen vorgesehen sind. Es ist ein einziges, gitterförmiges Lichtleiterelement beschrieben, das als einteiliger Rahmen ausgeführt ist, umfassend drei Horizontalelemente und zwei Vertikalelemente, die aus einem transparenten Kunststoff, beispielsweise PMMA, gebildet sind, sodass in das Lichtleiterelement eingespeistes Licht sowohl weitergeleitet, als auch abgegeben werden kann. Das Licht wird in dieses Lichtleiterelement von einer oder mehreren Lichtquellen eingespeist. Dabei kann das Lichtleiterelement so dimensioniert sein, dass es unsichtbar hinter einem Kühlergrill angeordnet ist. Es kann aber auch sichtbar angeordnet sein.

In WO 2022/199728 A1 ist ein Kühlerschutzgrill beschrieben, mit einer Lichtleiste, die als eine Reihe von Punktlichtquellen ausgebildet sein kann, beispielsweise in Form von LED-Chips. Diese Lichtleiste ist auf einem zugeordneten Lichtleiter gerichtet. Dieser Lichtleiter läuft zusammen mit der Lichtleiste um einen Kühlergrill um, wobei der Kühlergrill zusammen mit einem Kühlergrillrahmen und dem Lichtleiter einen Hohlraum entlang des gesamten Umfangs des Kühlergrills begrenzen. Die Lichtleiste, die ebenfalls umläuft, befindet sich in eben diesem begrenzten Hohlraum. Die Frontseite des Kühlergrills weist eine Narbung zur Ablenkung des einfallenden Lichts aufweist, beispielsweise in Form einer Aufrauung der Oberfläche, sodass sich Vorsprünge oder Vertiefungen bilden, an welchen Licht reflektiert werden kann.

In US 2018/361971 A1 ist ein Kraftfahrzeug mit einem Kühlergrill beschrieben, der eine Vielzahl von zueinander beabstandeten Leuchtkörpern umfasst, denen eine Blende vorgelagert ist und denen jeweils eine Reflektoreinheit zugeordnet ist, die derart ausgeführt und angeordnet ist, dass Licht der Leuchtkörper jeweils durch die zugeordnete Reflektoreinheit derart reflektiert wird, das Licht durch den Kühlergrill aus dem Fahrzeug nach außen abgestrahlt wird. Die Reflektoreinheiten können reflektierende Oberflächen aufweisen, deren reflektierende Eigenschaften sich vorzugsweise aus dem Material der Oberfläche ergibt, wozu beispielsweise Chrom oder Aluminium aufgedampft ist.

DE 10 2014 015 185 A1 beschreibt ein Anbauteil für ein Fahrzeug mit zumindest einer Leuchteinheit zur Erzeugung einer Lichtverteilung auf zumindest einem Abschnitt des Anbauteils. Die Leuchteinheit umfasst ein Gehäuse, wobei das Gehäuse derart ausgebildet ist, dass mittels zumindest einer Lichtquelle erzeugtes Licht derart aus dem Gehäuse auskoppelbar ist, dass eine Hell-Dunkel-Grenze der Lichtverteilung zumindest im Wesentlichen an einer Kante des zumindest einen Abschnitts des Anbauteils ausgebildet ist.

FR 3 087 247 A1 betrifft eine Beleuchtungsvorrichtung, die geeignet ist, an einem Karosserieteil eines Kraftfahrzeugs angebracht zu werden, bestehend aus einem ersten Beleuchtungselement, das geeignet ist, Licht in im Wesentlichen einer ersten Hauptrichtung abzugeben, und einem zweiten Beleuchtungselement, das geeignet ist, Licht in im Wesentlichen einer zweiten Hauptrichtung abzugeben, die sich von der ersten Hauptrichtung unterscheidet.

JP 2015 220205 beschreibt eine Beleuchtungsvorrichtung, die indirektes Licht erzeugt, um einem zu verzierenden Bauteil ein komplexes und ansprechendes äußeres Erscheinungsbild zu verleihen und gleichzeitig dessen gestalterische Merkmale zur Geltung zu bringen, ohne die Luftdurchlässigkeit des Bauteils zu beeinträchtigen. Vorgesehen ist ein Frontgitter bestehend aus seitlich angeordneten Lamellen mit mehreren Rippen. Rahmenelemente bilden jeweils einen seitlichen Außenrahmen des Frontgitters. In jedem dieser Rahmenelemente ist ein transparentes Material untergebracht. Die Leuchtflächen der transparenten Materialien sind entlang der seitlichen Außenkanten des Frontgitters angeordnet und befinden sich weiter vorn an der Fahrzeugkarosserie als die Lamellen. LEDs sind an den beiden Stirnflächen des transparenten Materials in Längsrichtung gegenüberliegend angeordnet, ebenso wie LEDs an den beiden Stirnflächen des transparenten Materials.

Der Erfindung liegt das Problem zugrunde, ein verbessertes Kühlerschutzgitter anzugeben.

Zur Lösung des Problems ist erfindungsgemäß ein Kühlerschutzgitter für ein Kraftfahrzeug vorgesehen, mit einem Gitterkörper mit mehreren Gitteröffnungen, wobei zumindest ein Teil der Gitteröffnungen über eine mit einer Oberflächenstrukturierung versehene, lichtstreuende Fläche begrenzt ist, sowie mit mehreren Leuchtmitteln, die jeweils eine Fläche beleuchten, wobei die Leuchtmittel an einem gemeinsamen Träger, der an der Rückseite des Gitterkörpers befestigt ist, angeordnet sind.

Das erfindungsgemäße Kühlerschutzgitter bietet die Möglichkeit, dass der Gitterschutzkörper selbst als beleuchtetes und damit auch selbst Licht abstrahlendes Element verwendet wird. Hierzu ist zumindest ein Teil der Gitteröffnungen über eine eine definierte Oberflächenstrukturierung aufweisende Fläche begrenzt. Diese Oberflächenstrukturierung ist als eine Art Narbung respektive definierte Oberflächenrauigkeit ausgeführt, derart, dass bei Lichteinfall das Licht von der Oberflächenstrukturierung diffus gestreut wird. Den über eine solche strukturierte, lichtstreuende Fläche begrenzten Gitteröffnungen ist jeweils ein Leuchtmittel zugeordnet, beispielsweise eine LED, über die die jeweilige zugeordnete Fläche beleuchtet wird. Dadurch, dass das Licht an der jeweils beleuchteten Fläche reflektiert und diffus gestreut wird, ist letztlich die gesamte strukturierte Fläche als gleichmäßige Leuchtfläche sichtbar. Sind mehrere solcher Flächen am Kühlerschutz vorgesehen, so ist demzufolge eine entsprechend große Vielzahl definierter Leuchtflächen am Kühlerschutzgitter zu sehen, die klar abgegrenzt sind von nicht beleuchteten Gitterbereichen. Das Kühlerschutzgitter respektive das hierüber erzeugte Leuchtmuster ist klar und eindeutig erkennbar, was die Erfassbarkeit des Kühlerschutzgitters und damit natürlich auch des damit ausgerüsteten Kraftfahrzeugs verbessert, mithin also beispielsweise im Umfeld befindliche Personen das Fahrzeug noch besser erkennen können. Auch vorausfahrende Fahrzeuge können das Fahrzeug im Rückspiegel besser erkennen, da im Rückspiegel regelmäßig das Kühlerschutzgitter zu sehen ist. Das derart ausgeleuchtete oder quasi selbstleuchtende Kühlerschutzgitter kann daher sogar als Tagfahrlicht verwendet werden, beziehungsweise zumindest zusätzlich zu sonstigen Tagfahrlichtern genutzt werden.

Dies wird durch die Ausbildung der definierten Oberflächenstrukturierung also einer definierten Rauigkeit oder Narbung, der Reflexions- oder Leuchtfläche erreicht. Denn durch die diffuse Streuung erscheint die Fläche als entsprechend großer Leuchtfleck, was die Wahrnehmbarkeit deutlich verbessert. Ohne eine solche Oberflächenstrukturierung, wenn also die Fläche eben und, wie oft, lackiert ist, würde sich an der Fläche lediglich der lokale Lichtpunkt des Leuchtmittels spiegeln, also als kleiner Lichtpunkt, der mitunter nur schwer wahrnehmbar ist.

Zweckmäßig ist es ferner, wenn die mit der Oberflächenstrukturierung versehene Fläche mit einer lichtreflektierenden Beschichtung versehen ist. Durch diese Beschichtung wird die Reflektivität der strukturierten Fläche erhöht. Durch die Oberflächenstrukturierung wird aber gleichzeitig verhindert, dass die Beschichtung das Licht nur punktuell reflektiert. Die Oberflächenstrukturierung erlaubt daher auch das Beleuchten solcher beschichteter Flächen mit dem Ergebnis, dass diese als gleichmäßig leuchtende Flächen wahrgenommen werden.

Dabei kann eine solche reflektierende Beschichtung eine Glanzlackierung, insbesondere eine Hochglanzlackierung sein, mit der das Kühlerschutzgitter entweder vollflächig oder lokal, zumindest an den strukturierten Flächen, versehen ist.

Wie ausgeführt, ist jeder strukturierten Fläche ein separates Leuchtmittel, beispielsweise eine LED zugeordnet. Um diese möglichst einfach am Gitterkörper anzuordnen, sieht die Erfindung vor, dass die Leuchtmittel an einem gemeinsamen Träger, der an dem Kühlerschutzgitter befestigt ist, angeordnet sind. Es wird also ein Leuchtmittelträger verwendet, an dem sämtliche Leuchtmittel angeordnet sind. Durch Montage des einfach handhabbaren und verbaubaren Trägers werden folglich sämtliche Leuchtmittel in einem einzigen Montagevorgang am Gitterkörper festgelegt und positionsgenau fixiert, sodass jedes Leuchtmittel einer strukturierten Fläche zugeordnet ist und diese bestmöglich beleuchten kann.

Dabei ist der Träger zweckmäßigerweise als Trägergitter ausgeführt, das mit den Gitteröffnungen korrespondierende Trägeröffnungen aufweist. Das heißt, dass die Trägergitteröffnungen positionsgenau mit den Gitteröffnungen des Gitterkörpers fluchten. Ein solches Trägergitter respektive ein solcher Träger ist beispielsweise ein flexibles Kunststoffelement, das einerseits einfach herstellbar ist, andererseits auch einfach ausricht- und montierbar ist und sich aufgrund seiner Flexibilität ohne Weiteres der Geometrie des Gitterkörpers anpassen kann.

Am Trägergitter sind zweckmäßigerweise benachbart zu zumindest einem Teil der Trägergitteröffnungen Halterungen zur Befestigung jeweils eines Leuchtmittels vorgesehen. Das Trägergitter ist also als vorgefertigtes Bauteil bereits mit entsprechenden Halterungen versehen, an denen die Leuchtmittel fixiert werden können. Diese Halterungen sind zweckmäßigerweise als Rasthalterungen ausgeführt, an denen die Leuchtmittel verrastet sind. Jedes Leuchtmittel weist also ein entsprechendes Gehäuse oder dergleichen auf, sodass es an den Rasthalterungen auf einfach Weise verrastet werden kann. Im Rahmen der Ausrüstung des Trägers respektive Trägergitters mit den Leuchtmitteln sind diese demzufolge lediglich anzusetzen und zu verrasten, was einfach von statten gehen kann.

Wie beschrieben ist das Trägergitter bevorzugt aus einem flexiblen Kunststoffmaterial, also mattenartig ausgeführt, sodass es sich aufgrund seiner Flexibilität einfach montieren lässt und sich gut an die Struktur des üblicherweise aus einem deutlich härteren Kunststoff gefertigten Gitterkörpers anpassen kann.

Zur einfachen Montage sind zweckmäßigerweise am Träger oder am Trägergitter und am Gitterschutzkörper miteinander verbindbare Verbindungselement vorgesehen, die in Weiterbildung der Erfindung als Rastelemente ausgeführt sein können. Insbesondere diese Rastelemente erlauben eine sehr einfache Montage, da der Träger respektive das Trägergitter lediglich am Gitterkörper positioniert und dagegen gedrückt werden muss, sodass die Rastelemente miteinander verschnappen und sich eine feste Fixierung ergibt. Auch ein Verschrauben ist natürlich möglich.

Die Leuchtmittel selbst sind entweder in Reihe oder parallel geschaltet und liegen zweckmäßigerweise an einer gemeinsamen Anschlusseinrichtung zum Anschließen einer externen Stromversorgung. Das heißt, dass sämtliche Leuchtmittel über eine gemeinsame Anschlusseinrichtung versorgt und auch angesteuert werden können. Entsprechende Versorgungsleitungen von der Anschlusseinrichtung zum jeweiligen Leuchtmittel können ohne Weiteres an der Rückseite des Trägers respektive des Trägergitters verlegt werden.

Als Leuchtmittel werden wie beschrieben bevorzugt LEDs verwendet, die hinreichend kleinbauend sind und ohne weiteres entsprechend an der Trägerrückseite verbaut werden können. Sie zeichnen sich durch eine hohe Leuchtleistung bei gleichzeitig niedriger Stromaufnahme aus.

Dabei können die Leuchtmittel bevorzugt RGB-LEDs sein (RGB = rot-grün-blau). Diese LEDs ermöglichen die Erzeugung unterschiedlichster Farben, sodass hierüber die Lichtfarbe nahezu beliebig variiert werden kann und demzufolge auch die Farbe, in der das Kühlerschutzgitter quasi lokal "selbst leuchtet". Insbesondere ermöglicht es die Verwendung solcher LEDs bei Bedarf die Farbe auch zu wechseln, um beispielsweise von weißem Licht auf rotes Licht, das regelmäßig als Warnfarbe wahrgenommen wird, umzuschalten und Ähnliches.

Neben dem Kühlerschutzgitter selbst betrifft die Erfindung ferner ein Kraftfahrzeug, umfassend ein Kühlerschutzgitter der vorstehend beschriebenen Art.

Das Fahrzeug weist zweckmäßigerweise eine Steuerungseinrichtung zum Steuern des Betriebs der Leuchtmittel auf. Diese können entweder permanent von Haus aus zugeschaltet sein, oder können bei Bedarf zugeschaltet werden, beispielsweise in Abhängigkeit der Umgebungslichtverhältnisse, oder auf Wunsch des Fahrers, der den Leuchtbetrieb beispielsweise über eine Bedieneinrichtung wie einen Touchscreen mit einem entsprechenden Bedienmenü ein- oder ausschalten kann.

Dabei können die Leuchtmittel nur gemeinsam ansteuerbar sein, das heißt, dass alle Leuchtmittel gemeinsam leuchten, mithin also der Gitterkörper quasi maximal ausgeleuchtet wird. Alternativ ist es auch denkbar, dass die Leuchtmittel separat oder in unterschiedlichen Gruppen ansteuerbar sind. Diese selektive singuläre oder gruppenweise Ansteuerung ermöglicht es, verschiedene Leuchtmuster oder Leuchtszenarien zu erzeugen. Beispielsweise können die Leuchtmittelgruppen wechselweise blinken, wobei ein solches Blinken natürlich die Wahrnehmbarkeit noch weiter erhöht. Ebenfalls denkbar ist es, die einzelnen Gruppen in unterschiedlichen Farben leuchten zu lassen, was die Warnfunktion ebenfalls verbessert und Ähnliches.

Weitere Vorteile und Einzelheiten der vorliegenden Erfindung ergeben sich aus den im Folgenden beschriebenen Ausführungsbeispielen sowie anhand der Zeichnungen. Dabei zeigen:
- Fig. 1: ein erfindungsgemäßes Kraftfahrzeug in einer Teilansicht mit einem erfindungsgemäßen Kühlerschutzgitter,
- Fig. 2: eine Prinzipdarstellung eines Teils des Kühlerschutzgitters aus Fig. 1 unter Darstellung der an einem Gitterkörper über ein Trägergitter angeordneten Leuchtmittel sowie deren Beleuchtung der strukturierten Flächen,
- Fig. 3: eine Prinzipdarstellung eines Trägergitters ohne Leuchtmittel,
- Fig. 4: eine Teilansicht des Trägergitters aus Fig. 3 mit einem daran verrasteten Leuchtmittel, und
- Fig. 5: eine Teilansicht des Trägergitters mit einem Leuchtmittel nebst Verkabelung.

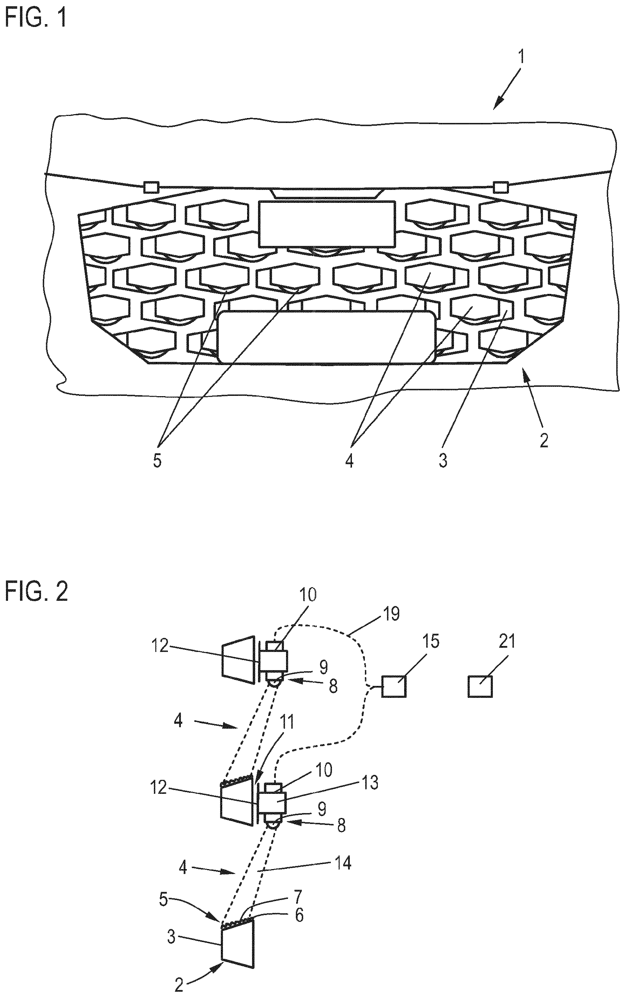

Fig. 1 zeigt eine Teilansicht eines erfindungsgemäßen Kraftfahrzeugs 1 mit einem erfindungsgemäßen Kühlerschutzgitter 2. Diese umfasst einen Gitterkörper 3, der aus einem geeigneten Kunststoffmaterial gefertigt ist. Der Gitterkörper 3 weist eine Vielzahl von Gitteröffnungen 4 auf, siehe hierzu auch Fig. 2, die im gezeigten Beispiel wabenförmig sind. Zumindest ein Teil der Gitteröffnungen 4 ist am unteren Rand über eine Fläche 5 begrenzt, die eine lichtstreuende Oberflächenstrukturierung 6 in Form einer definierten Rauigkeit oder Narbung aufweist, wie prinzipiell in Fig. 2 gezeigt. Die Fläche 5 ist mit einer Hochglanzlackierung 7 belegt, das heißt, dass die Oberflächenstrukturierung 6 überlackiert ist, sie definiert jedoch nach wie vor die Oberfläche.

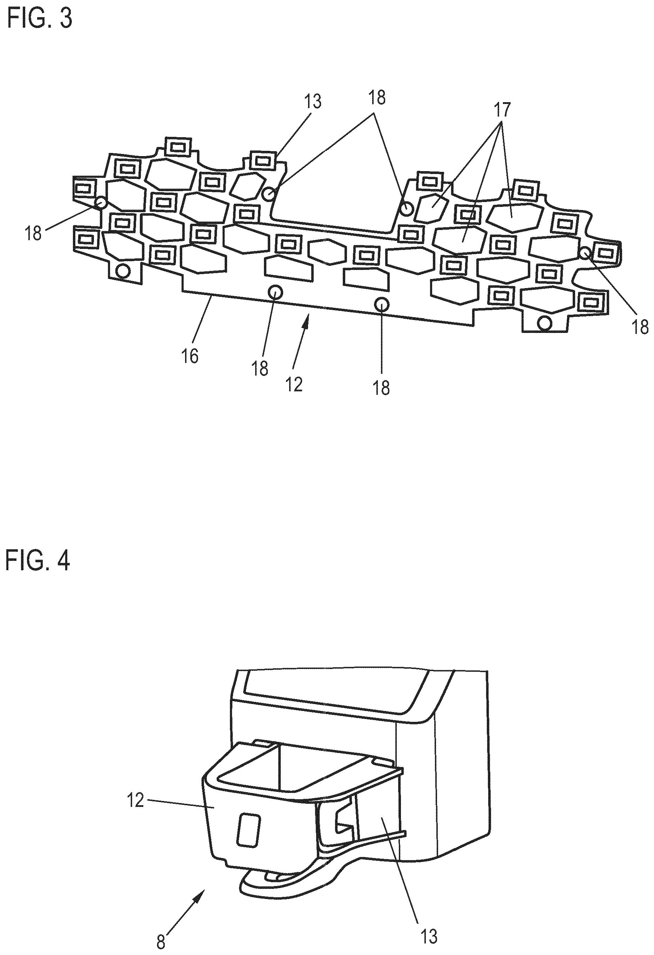

Den strukturierten Flächen 5 zugeordnet ist jeweils ein Leuchtmittel 8 in Form einer LED 9, bei der es sich um weißes Licht emittierende LEDs oder um RGB-LEDs, die unterschiedlichste Farben emittieren können, handeln kann. Jedes Leuchtmittel 9 weist ein Gehäuse 10 auf, über das es an einem Träger 11 in Form eines Trägergitters 12 fixiert ist. Das Trägergitter 12 weist hierzu entsprechende Rasthalterungen 13 auf, an denen das Gehäuse 12 verrastet ist, wie im Detail in Fig. 4 gezeigt.

Der Träger 12 ist als Trägergitter ausgeführt, wonach nachfolgend noch eingegangen wird, wobei dieses mattenartige Trägergitter auf einfache Weise an der Rückseite des Gitterkörpers 2 befestigt werden kann.

Wie Fig. 2 zeigt, sind die einzelnen Leuchtmittel derart angeordnet, dass sie, wenn sie Licht emittieren, dieses Licht 14 direkt auf die strukturierte Fläche 15 strahlen. Durch die Oberflächenstrukturierung 6, trotz deren Glanzlackierung, wird das eingestrahlte Licht diffus reflektiert, sodass es trotz mehr oder weniger punktueller Beleuchtung zu einer in der Ansicht gleichmäßigen, vollflächigen Ausleuchtung der jeweiligen Fläche 5 kommt. Von vorne, also von der Vorderseite des Kühlerschutzgitters 2 aus gesehen, leuchtet letztlich jede Fläche 5 quasi selbst, ist also als entsprechende Leuchtfläche zu erkennen.

Über die Fläche des Gitterkörpers 3 können eine Vielzahl von Flächen 5 vorgesehen sein, damit aber auch eine entsprechende Vielzahl an einzelnen Leuchtmitteln 8. Die Leuchtmittel 8 sind zweckmäßigerweise allesamt an einer gemeinsamen Anschlusseinrichtung 15 zusammengeführt, was einen einfachen Anschluss der gesamten Leuchteinrichtung an eine Stromversorgung, aber auch an eine Steuerungseinrichtung 21 ermöglicht. Denn es ist möglich, über eine Steuerungseinrichtung den Betrieb der sämtlichen Leuchtmittel 8 zentral zu steuern. Dieser Steuerbetrieb kann ein einfacher Ein/Aus-Betrieb sein, das heißt, dass sämtliche Leuchtmittel 8 gemeinsam ein- und ausgeschaltet werden. Alternativ ist es auch denkbar, dass jedes einzelne Leuchtmittel 8 über die Steuerungseinrichtung separat angesteuert werden kann, sodass beliebige Leuchtmittel an- oder ausgeschaltet werden können. Auch können Leuchtmittelgruppen gebildet werden, die separat angesteuert werden können. Das einzelne Ansteuern oder das Ansteuern in Leuchtmittelgruppen ermöglicht es, unterschiedliche Leuchtmuster oder Leuchtszenarien am Gitterkörper 3 zu erzeugen. Auch ein Blinken ist möglich, wie natürlich auch unterschiedliche Farben, wenn RGB-LEDs verwendet werden.

Fig. 3 zeigt in einer Prinzipdarstellung einen Träger 12 in Form eines Trägergitters 16. Das Trägergitter 16 weist eine Vielzahl einzelner Trägergitteröffnungen 17 auf, die, nachdem das Trägergitter 16 an der Rückseite des Gitterkörpers 3 angeordnet wird, mit den Gitteröffnungen 4 fluchten. An dem Trägergitter 16 sind die bereits beschriebenen Halterungen 13 vorgesehen, die im Detail in Fig. 4 gezeigt sind. Die Halterungen 13 umfassen beispielsweise zwei seitliche Rastarme, zwischen denen das Gehäuse 12 des jeweiligen Leuchtmittels 8 verrastet und fixiert wird.

Das Trägergitter 16 ist bevorzugt mit mehreren Verbindungselementen 18 in Form geeigneter Rastelement versehen, die mit entsprechenden Rastelementen an der Rückseite des Gitterkörpers 3 verrasten. Das bereits mit den Leuchtmitteln 8 bestückte Trägergitter 16 wird auf einfache Weise auf die Rückseite des Gitterkörpers 3 aufgelegt und angedrückt, bis die Verbindungsmittel 18 mit denen des Gitterkörpers 3 verschnappen, worüber die gesamte Leuchteinrichtung fixiert ist. Sämtliche Leuchtmittel 8 sind positionsgenau bezüglich der zugeordneten Fläche 5 positioniert. Alternativ zur Verwendung von geeigneten Rastelementen als Verbindungsmittel ist natürlich auch denkbar, dass die Verbindungsmittel 18 der Aufnahme von Befestigungsschrauben dienen, die an entsprechenden Schraubabschnitten des Gitterkörpers 3 verschraubt werden.

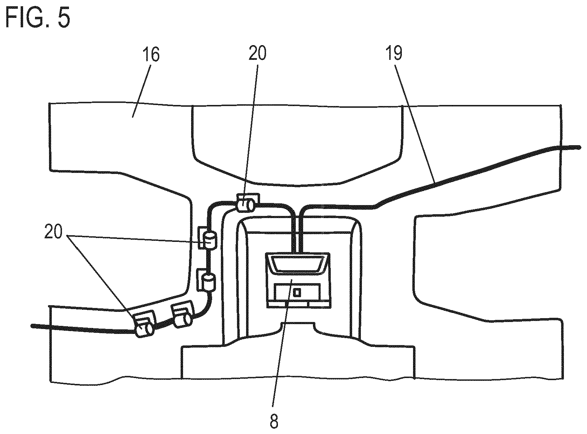

Fig. 5 zeigt schließlich einen Ausschnitt aus dem Trägergitter 16 mit daran angeordnetem Leuchtmittel 8 sowie einer Verkabelung 19, der gestrichelt auch in Fig. 2 gezeigt ist. Hierüber erfolgt letztlich die Verbindung sämtlicher Leuchtmittel 8, die entweder in Reihe oder parallel geschaltet sein können. Am Trägergitter 16 sind entsprechende Haltemittel 20 in Form von Klemmen und Ähnlichem vorgesehen, an denen die Verkabelung 19 fixiert werden kann und die gleichzeitig auch den Verlegeweg definieren. Die Verkabelung 19 endet wie beschrieben in der gemeinsamen Anschlusseinrichtung 15, die wiederum an eine externe Stromversorgung angeschlossen ist. Über die Anschlusseinrichtung 15 erfolgt auch die Ansteuerung über die in Fig. 2 im Grunde nach gezeigte Steuerungseinrichtung 21 des Kraftfahrzeugs 1, die den Leuchtbetrieb der Leuchtmittel 8 steuert, sei es durch gemeinsame Ansteuerung, sei es durch separate Ansteuerung oder durch gruppenweise Ansteuerung, wie auch, wenn möglich, durch entsprechende Ansteuerung zur Variation oder Einstellung einer bestimmten Leuchtfarbe.

Werden die Leuchtmittel 8 betrieben, so strahlen sie mehr oder weniger nur lokal auf die jeweilige Fläche 5, wobei das eingestrahlte Licht aufgrund der Oberflächenstrukturierung 6 diffus reflektiert wird, sodass, von der Vorderseite gesehen, jede Fläche 5 individuell gleichmäßig "leuchtet", also entsprechend eine Leuchtfläche bildet. Diese ist auf Grund der diffusen Reflexion relativ scharf von benachbarten, nicht beleuchteten Flächen oder Abschnitten des Gitterkörpers 3 abgegrenzt, sodass als sichtbares Muster nur die beleuchteten Flächen 5 wahrzunehmen sind. Dieses Leuchtmuster ist gut wahrnehmbar, was aus Sicherheitsgründen von Vorteil ist, da quasi das Kühlerschutzgitter als selbstleuchtendes Bauteil wahrgenommen wird. Weiterhin kann, wie bereits beschrieben, das dargestellte Leuchtmuster, also die Anzahl und Position der tatsächlich beleuchteten Flächen 5, durch entsprechende singuläre oder gruppenweise Ansteuerung der Leuchtmittel variiert werden, sodass es beispielsweise zu einem Blinken bei Ansteuerung in unterschiedlichen Gruppen kommt, oder zu einer Art Lauflicht, wenn in entsprechend schneller Abfolge die einzelnen Leuchtmittel der Reihe nach angesteuert werden, wie natürlich auch bei gemeinsamer Ansteuerung ein Blinken möglich ist. Natürlich ist auch eine entsprechende Farbvariation wie beschrieben möglich.

## Patentansprüche

1. Kühlerschutzgitter für ein Kraftfahrzeug, mit einem Gitterkörper (3) mit mehreren Gitteröffnungen (4), **dadurch gekennzeichnet, dass** zumindest ein Teil der Gitteröffnungen (4) über eine mit einer Oberflächenstrukturierung (6) versehene, Licht streuende Fläche (5) begrenzt ist, sowie mit mehreren Leuchtmitteln (8), die jeweils eine Fläche (5) beleuchten, wobei die Leuchtmittel (8) an einem gemeinsamen Träger (12), der an der Rückseite des Gitterkörpers (3) befestigt ist, angeordnet sind.

2. Kühlerschutzgitter nach Anspruch 1, **dadurch gekennzeichnet, dass** die mit der Oberflächenstrukturierung (6) versehenen Flächen (5) mit einer Licht reflektierenden Beschichtung (7) versehen sind.

3. Kühlerschutzgitter nach Anspruch 2, **dadurch gekennzeichnet, dass** die Beschichtung (7) eine Glanzlackierung, insbesondere eine Hochglanzlackierung ist.

4. Kühlerschutzgitter nach einem der vorangehenden Ansprüche, **dadurch gekennzeichnet, dass** der Träger (12) ein Trägergitter (16) ist, das mit den Gitteröffnungen (4) korrespondierende Trägergitteröffnungen (17) aufweist.

5. Kühlerschutzgitter nach Anspruch 4, **dadurch gekennzeichnet, dass** am Trägergitter (16) benachbart zu zumindest einem Teil der Trägergitteröffnungen (17) Halterungen (13) zur Befestigung jeweils eines Leuchtmittels (8) vorgesehen sind.

6. Kühlerschutzgitter nach Anspruch 5, **dadurch gekennzeichnet, dass** die Halterungen (13) als Rasthalterungen ausgeführt sind, an denen die Leuchtmittel (8) verrastet sind.

7. Kühlerschutzgitter nach einem der vorangehenden Ansprüche, **dadurch gekennzeichnet, dass** der Träger (12) oder das Trägergitter (16) aus einem flexiblen Kunststoffmaterial ist.

8. Kühlerschutzgitter nach einem der vorangehenden Ansprüche, **dadurch gekennzeichnet, dass** am Träger (12) oder am Trägergitter (16) und am Gitterkörper (3) miteinander verbindbare Verbindungselemente (18) vorgesehen sind.

9. Kühlerschutzgitter nach Anspruch 8, **dadurch gekennzeichnet, dass** die Verbindungselemente (18) Rastelemente sind.

10. Kühlerschutzgitter nach einem der vorangehenden Ansprüche, **dadurch gekennzeichnet, dass** die in Reihe oder parallel geschalteten Leuchtmittel (8) an einer gemeinsamen Anschlusseinrichtung (15) zum Anschließen einer externen Stromversorgung liegen.

11. Kühlerschutzgitter nach einem der vorangehenden Ansprüche, **dadurch gekennzeichnet, dass** die Leuchtmittel (8) LEDs sind.

12. Kühlerschutzgitter nach Anspruch 11, **dadurch gekennzeichnet, dass** die Leuchtmittel (8) RGB-LEDs sind.

13. Kraftfahrzeug, umfassend ein Kühlerschutzgitter (1) nach einem der vorangehenden Ansprüche.

14. Kraftfahrzeug nach Anspruch 13, **dadurch gekennzeichnet, dass** eine Steuerungseinrichtung (21) zum Steuern des Betriebs der Leuchtmittel (8) vorgesehen ist.

15. Kraftfahrzeug nach Anspruch 14, **dadurch gekennzeichnet, dass** die Leuchtmittel (8) nur gemeinsam ansteuerbar sind, oder dass die Leuchtmittel (8) separat oder in unterschiedlichen Gruppen ansteuerbar sind.

## Claims

1. Radiator grille for a motor vehicle, having a grille body (3) with multiple grille openings (4), **characterized in that** at least part of the grille openings (4) is delimited by way of a surface (5) which is provided with a surface structuring (6) and scatters light, and also with multiple illuminants (8), which each illuminate a surface (5), wherein the illuminants (8) are arranged on a common carrier (12), which is fastened to the back of the grille body (3).

2. Radiator grille according to Claim 1, **characterized in that** the surfaces (5) provided with the surface structuring (6) are provided with a light-reflecting coating (7).

3. Radiator grille according to Claim 2, **characterized in that** the coating (7) is a gloss coating, in particular a high-gloss coating.

4. Radiator grille according to any of the preceding claims, **characterized in that** the carrier (12) is a carrier grille (16), which has carrier grille openings (17) corresponding to the grille openings (4).

5. Radiator grille according to Claim 4, **characterized in that** holders (13) for the fastening of a respective illuminant (8) are provided on the carrier grille (16) adjacent to at least part of the carrier grille openings (17).

6. Radiator grille according to Claim 5, **characterized in that** the holders (13) are embodied as latching holders to which the illuminants (8) are latched.

7. Radiator grille according to any of the preceding claims, **characterized in that** the carrier (12) or the carrier grille (16) is made of a flexible plastics material.

8. Radiator grille according to any of the preceding claims, **characterized in that** connecting elements (18) which can be connected to one another are provided on the carrier (12) or on the carrier grille (16) and on the grille body (3).

9. Radiator grille according to Claim 8, **characterized in that** the connecting elements (18) are latching elements.

10. Radiator grille according to any of the preceding claims, **characterized in that** the illuminants (8) connected in series or in parallel are located on a common connection device (15) for connection to an external power supply.

11. Radiator grille according to any of the preceding claims, **characterized in that** the illuminants (8) are LEDs.

12. Radiator grille according to Claim 11, **characterized in that** the illuminants (8) are RGB LEDs.

13. Motor vehicle comprising a radiator grille (1) according to any of the preceding claims.

14. Motor vehicle according to Claim 13, **characterized in that** a control device (21) for controlling the operation of the illuminants (8) is provided.

15. Motor vehicle according to Claim 14, **characterized in that** the illuminants (8) can only be actuated together, or **in that** the illuminants (8) can be actuated separately or in different groups.

## Revendications

1. Grille de radiateur pour un véhicule automobile, comprenant un corps de grille (3) présentant plusieurs ouvertures de grille (4), **caractérisée en ce qu'**au moins une partie des ouvertures de grille (4) est délimitée par une surface (5) diffusant la lumière et pourvue d'une structuration de surface (6), et comprenant plusieurs moyens d'éclairage (8) qui éclairent respectivement une surface (5), les moyens d'éclairage (8) étant disposés sur un support commun (12) qui est fixé à l'arrière du corps de grille (3).

2. Grille de radiateur selon la revendication 1, **caractérisée en ce que** les surfaces (5) pourvues de la structuration de surface (6) sont pourvues d'un revêtement (7) réfléchissant la lumière.

3. Grille de radiateur selon la revendication 2, **caractérisée en ce que** le revêtement (7) est une peinture brillante, en particulier une peinture haute brillance.

4. Grille de radiateur selon l'une quelconque des revendications précédentes, **caractérisée en ce que** le support (12) est une grille de support (16) qui présente des ouvertures de grille de support (17) correspondant aux ouvertures de grille (4).

5. Grille de radiateur selon la revendication 4, **caractérisée en ce que**, sur la grille de support (16), des fixations (13) pour la fixation d'un moyen d'éclairage (8) sont respectivement prévues de manière adjacente à au moins une partie des ouvertures de grille de support (17).

6. Grille de radiateur selon la revendication 5, **caractérisée en ce que** les fixations (13) sont réalisées sous la forme de fixations par encliquetage sur lesquelles les moyens d'éclairage (8) sont encliquetés.

7. Grille de radiateur selon l'une quelconque des revendications précédentes, **caractérisée en ce que** le support (12) ou la grille de support (16) est constitué d'une matière plastique flexible.

8. Grille de radiateur selon l'une quelconque des revendications précédentes, **caractérisée en ce que** des éléments de liaison (18) pouvant être reliés entre eux sont prévus sur le support (12) ou sur la grille de support (16) et sur le corps de grille (3).

9. Grille de radiateur selon la revendication 8, **caractérisée en ce que** les éléments de liaison (18) sont des éléments d'encliquetage.

10. Grille de radiateur selon l'une quelconque des revendications précédentes, **caractérisée en ce que** les moyens d'éclairage (8) connectés en série ou en parallèle se trouvent sur un dispositif de raccordement (15) commun pour le raccordement d'une alimentation électrique externe.

11. Grille de radiateur selon l'une quelconque des revendications précédentes, **caractérisée en ce que** les moyens d'éclairage (8) sont des LED.

12. Grille de radiateur selon la revendication 11, **caractérisée en ce que** les moyens d'éclairage (8) sont des LED RVB.

13. Véhicule automobile, comprenant au moins une grille de radiateur (1) selon l'une quelconque des revendications précédentes.

14. Véhicule automobile selon la revendication 13, **caractérisé en ce qu'**il est prévu un dispositif de commande (21) pour commander le fonctionnement des moyens d'éclairage (8).

15. Véhicule automobile selon la revendication 14, **caractérisé en ce que** les moyens d'éclairage (8) ne peuvent être commandés que conjointement, ou **en ce que** les moyens d'éclairage (8) peuvent être commandés séparément ou par groupes différents.
